# EUROPÄISCHE PATENTANMELDUNG

(11) **EP 0 633 645 A1**
(43) Veröffentlichungstag der Anmeldung: **11.01.1995**
(21) Anmeldenummer: 94110550.4
(22) Anmeldetag: 07.07.1994
(51) Int. Cl.: H02K 5/14, H02K 5/10

(54) **Feuchtigkeitsdicht geschlossener Kommutatormotor zum Antrieb einer axial angeflanschten Hydraulikpumpe**

(30) Priorität: 10.07.1993 DE 4323066
(71) Anmelder: Licentia Patent-Verwaltungs-GmbH, D-60596 Frankfurt (DE)
(72) Erfinder: Blumenberg, Rainer, D-26123 Oldenburg (DE)
(74) Vertreter: Erbacher, Alfons, Dipl.-Ing.

(57) **Zusammenfassung**

Es ist ein feuchtigkeitsdicht abgeschlossener Kommutatormotor zum Antrieb einer in einem Pumpengehäuse (35) angeordneten Hydraulikpumpe bekannt, bei dem die aus einem Isolierwerkstoff bestehende Bürstentragplatte (131) für die mit dem Kommutator (117) zusammenwirkenden Bürsten als Flachdichtungselement zwischen dem Pumpengehäuse (129) und dem Motorgehäuse (103) ausgebildet ist. Dieser Kommutator (101) wird erfindungsgemäß dadurch verbessert, daß das topfförmige Motorgehäuse (103) eine an die innere Zylindermantelfläche (107) sich als Erweiterung anschließende, kegelförmige Dichtungsfläche (139) aufweist, welche mit einer an der in das Motorgehäuse (103) einschiebbaren Bürstentragplatte (131) angeordneten kegeligen Gegendichtungsfläche (143) in Anlage bringbar ist. Hierdurch wird eine laufende feuchtigkeitsdichte Montage des Kommutatormotors (101) erzielt.

## Beschreibung

Die Erfindung betrifft einen Elektromotor, insbesondere einen feuchtigkeitsdicht geschlossenen Kommutatormotor zum Antrieb einer axial angeflanschten Hydraulikpumpe der im Oberbegriff des Patentanspruchs 1 angegebenen Art.

Durch die EP 0 472 746 A1 ist bereits ein Elektromotor bekannt, bei dem aus der durch ein Lagerschild abgeschlossenen Stirnseite eines topfförmigen Motorgehäuses die Rotorwellen mit einem Exzenterwellenende herausragt, das die Stößel einer angeflanschten Hydraulikpumpe antreibt. In dem Lagerschild ist außerdem eine getrennte Tragplatte für Bürsten vorgesehen, die mit dem am Antrieb vorgesehenen Kommutator in bekannter Weise zusammenwirken. Aufgrund der vielen Einzelteile ist der Montageaufwand bei diesem bekannten Elektromotor noch recht aufwendig.

Weiterhin ist durch die DE 42 35 962.7 ein Elektromotor vorgeschlagen worden, bei dem das Flachdichtungselement zwischen dem Motor und der angeflanschten Hydraulikpumpe durch die Bürstentragplatte gebildet wird. Hierbei hat der an dem Getriebegehäuse der Hydraulikpumpe angeflanschte Elektromotor kein Lagerschild mehr, welches das Motorgehäuse feuchtigkeitsdicht abschließt und das zweite Kugellager trägt. Erfindungsgemäß übernimmt die Bürstentragplatte die Dichtungsfunktion zwischen dem Motor- und dem Pumpengehäuse. Außerdem dient die Bürstentragplatte gleichzeitig als Zentrierelement für das auf der Motorwelle befestigte zweite Lager. Hiermit ist in diesem Montagezustand bereits eine Prüfung des Elektromotors gegeben. Auch kann der Elektromotor in diesem Vormontagezustand sicher transportiert werden. Durch Wegfall des Lagerschildes wird eine billige und leicht zu montierende Einheit von einem Elektromotor für eine Hydraulikpumpe geschaffen.

Der Erfindung liegt die Aufgabe zugrunde, den vorgeschlagenen Elektromotor nach DE 42 35 962.7 in Bezug auf die Kompaktheit und auf die Montagefreundlichkeit noch weiter zu verbessern. Diese Aufgabe wird durch die kennzeichnenden Merkmale des Patentanspruchs 1 gelöst.

Weitere vorteilhafte Ausgestaltungen des Erfindungsgegenstandes sind den weiteren Unteransprüchen zu entnehmen.

Die Erfindung wird anhand eines Ausführungsbeispiels im folgenden näher beschrieben. Es zeigen:
- Figur 1: einen axialen Teilschnitt von einem Kommutatormotor mit einem angeflanschten Pumpengehäuse nach dem Stand der Technik,
- Figur 2: eine Einzelheit aus Figur 1,
- Figur 3: einen Schnitt durch den erfindungsgemäßen Elektromotor,
- Figur 4: eine Einzelheit aus Figaur 3,
- Figur 5: den Rotor und
- Figur 6: das Motorgehäuse mit den Permanentmagneten.

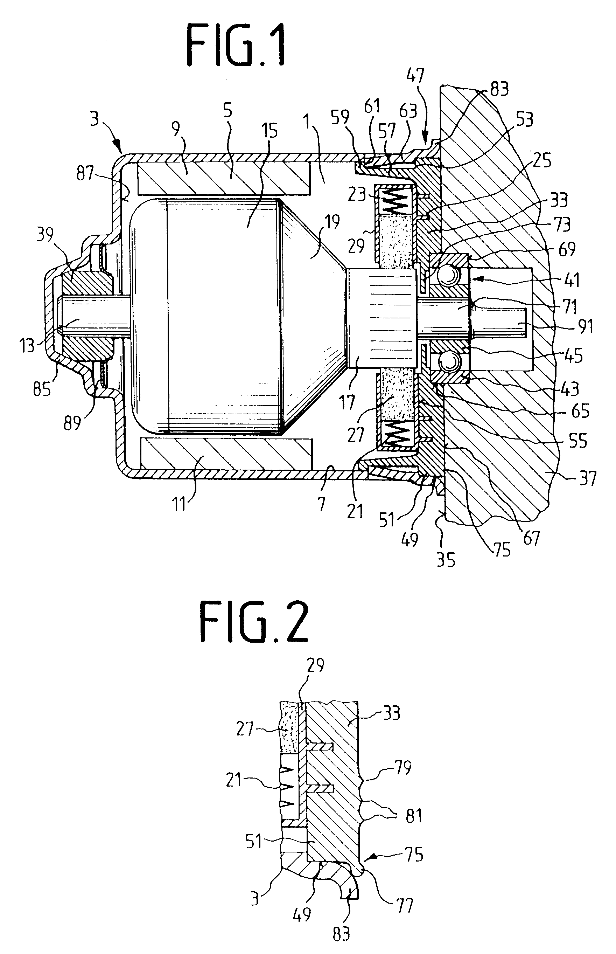

Die Figur 1 zeigt einen Elektromotor, insbesondere einen geschlossenen, feuchtigkeitsdichten Kommutatormotor 1 nach DE 42 35 962.7 mit einem topfförmigen Motorgehäuse 3, dessen zylindrisches Mantelteil 5 auf der Innenseite 7 mit Dauermagneten 9, 11 versehen ist. In dem Motorgehäuse 3 ist eine Rotorwelle 13 mit einem darauf befestigten Rotorblechpaket 15 angeordnet, das eine an einem Kommutator 17 angeschlossene Rotorwicklung 19 aufnimmt. Der Kommutator 17 steht mit durch Federn 21, 23 beaufschlagten Bürsten 25, 27 in Kontaktverbindung, welche in Gehäusen 29, 31, geführt sind. Diese Führungsgehäuse 29, 31 sind mit einer Bürstentragplatte 33 fest verbunden und bestehen z.B. aus Messing. Das Motorgehäuse 3 ist an einer Stirnfläche 35 eines Pumpengehäuses 37 einer nicht näher dargestellten Hydraulikpumpe angeflanscht angeordnet, wobei zwischen den Stirnflächen des Motorgehäuses 3 und des Pumpengehäuses 37 ein Flachdichtelement angeordnet ist. Die Rotorwelle 13 ist einerseits in einem Lager 39 im Inneren des Motorgehäuses 3 und andererseits in einem Lager 41 gelagert, welches ein Wälzlager mit einem Außenring 43 und einem Innenring 45 ist. Das Lager 39 ist gemäß Figur 1 ein durch eine Klemmbrille 89 gehaltenes Gleitlager, aber im Rahmen der Erfindung kann dieses Lager auch aus einem Wälzlager bestehen.

Das Wälzlager 41 ist ein abgedichtetes Lager, welches ein Eindringen von Flüssigkeiten in das Lager und damit in das Innere des Motorgehäuses 3 verhindert.

Die Rotorwelle 13 ragt mit ihrem verlängerten Exzenterende 91 in das Getriebegehäuse 37 hinein, das über nicht dargestellte Pumpenstößel der Hydraulikpumpe z.B. ein Kraftfahrzeug-Antiblockiersystem antreibt.

Gemäß Figur 1 ist das Flachdichtungselement zwischen den Stirnflächen des Motorgehäuses 3 und des Pumpengehäuses 37 die, aus einem Isolierwerkstoff bestehende Bürstentragplatte 33 für die mit dem Kommutator 17 zusammenwirkenden Bürsten 25, 27. Diese Bürstentragplatte dient gleichzeitig als Zentrierelement für das auf der Rotorwelle 13 fest angeordnete Lager 41 und ist als Deckel mit dem Motorgehäuse 3 fest verbunden. Das topfförmige Motorgehäuse 3 ist in seiner zylindrischen Öffnungsumrandung 47 mit einer abgestuften Paßfläche 49 zur feuchtigkeitsdichten Anlage der an ihrem Außenrand mit einem zylindrischen Flanschteil 51 entsprechend ausgebildeten, scheibenförmigen Bürstentragplatte 33 versehen. Weiterhin weist die in die Öffnung des Motorgehäuses 3 formschlüssig eindrückbare Bürstentragplatte 33 an dem äußeren Rand 53 Ihrer inneren Stirnfläche 55 mehrere federnde Rasthaken 57 auf, dessen Rastzähne 59 hinter durch Metallverformungen des Motorgehäuses 3 gebildete Rastkanten 61 verrastbar sind. Diese Metallverformungen können aus durchgedrückten Butzen 63 in dem Motorgehäuse 3 oder auch aus teilweise ausgestanzten, biegbaren Lappen bestehen. Durch die obigen Merkmale wird eine einfache Montage der Bürstentragplatte 33 mit dem Motorgehäuse 3 geschaffen, wobei gleichzeitig eine sichere Verrastung der Bürstentragplatte mit dem Motorgehäuse 3 und eine exakte Vorzentrierung der Rotorwelle 13 in dem Motorgehäuse 3 geschaffen werden. Hiermit erhält man bereits einen vormontierten Elektromotor 1 für eine Hydraulikpumpe, der in diesem Zustand bereits voll prüfbar und auch transportfähig ist.

Gemäß Figur 1 ist zumindest das Lager 41 ein abgedichtetes Wälzlager, dessen Außenring 43 einerseits in einer Zentrierausnehmung 65 in der äußeren Stirnfläche 67 der Bürstentragplatte 33 und andererseits in einer Lagerausnehmung 69 in der Stirnfläche 35 des Pumpengehäuses 37 lagert, und dessen Innenring 45 mit einem Preßsitz auf einer Lagerfläche 71 der Rotorwelle 13 fest angeordnet ist. Um ein Eindringen von Flüssigkeiten, wie z.B. Öl in das Innere des Motorgehäuses 3 von dem Lager 41 aus sicher zu verhindern, weist die Zentrierausnehmung 65 in der Stirnfläche 67 der Bürstentragplatte 33 eine ringförmige, abgestufte Vertiefung 73 als Labyrinthdichtung vor dem zweiten Wälzlager 41 auf. Außerdem kann die Bürstentragplatte 33 an dem äußeren Rand 75 auf ihrer dem Pumpengehäuse 37 zugewandten Stirnfläche 67 mit einer Dichtungslippe versehen sein. Hierdurch wird ein Eindringen von Flüssigkeiten in das Motorgehäuse 3 von außen sicher verhindert. Falls erforderlich, kann die Stirnfläche 67 der Bürstentragplatte 33 noch mehrere zu der Zentrierausnehmung 65 konzentrisch angeordnete, ringförmige Erhebungen 79, 81 als Dichtungsringe aufweisen, siehe Figur 2. Die Dichtungslippe 77 und/oder die Dichtungsringe 79, 81 sind einstückig mit der Bürstentragplatte 33 ausgebildet. Hierdurch wird ohne zusätzliche Bauteile eine hohe Dichtwirkung gegen das Eindringen von Flüssigkeiten in das Innere des Motorgehäuses 3 erzielt. Das Befestigen des Motorgehäuses 3 an dem Pumpengehäuse 37 ist dadurch möglich, daß das Motorgehäuse 3 in der Öffnung des zylindrischen Mantelteiles ein um 90 Grad nach außen gerichtetes Flanschteil 83 mit Durchgangsöffnungen für nicht dargestellte Schrauben aufweist. Bei einer präzisen Ausführung des Flanschteiles 83 und der Stirnfläche 35 des Pumpengehäuses 37 wird bereits eine derartige Dichtwirkung gegen Eindringen von Flüssigkeiten in das Pumpengehäuse 37 bzw. in das Motorgehäuse 3 erzielt, daß sich die Dichtlippe 77 an der Bürstentragplatte 33 erübrigt.

Das Lager 39 für die Rotorwelle 13 gemäß Figur 1 ist in einer entsprechend tief gezogenen Profilierung 85 in dem Bodenteil 87 des topfförmig ausgebildeten Motorgehäuses 3 angeordnet. Das Motorgehäuse 3 einschließlich der Profilierung 85 werden in einem Arbeitsgang hergestellt, so daß sich ein billiger und leicht zu montierender Elektromotor herstellen läßt.

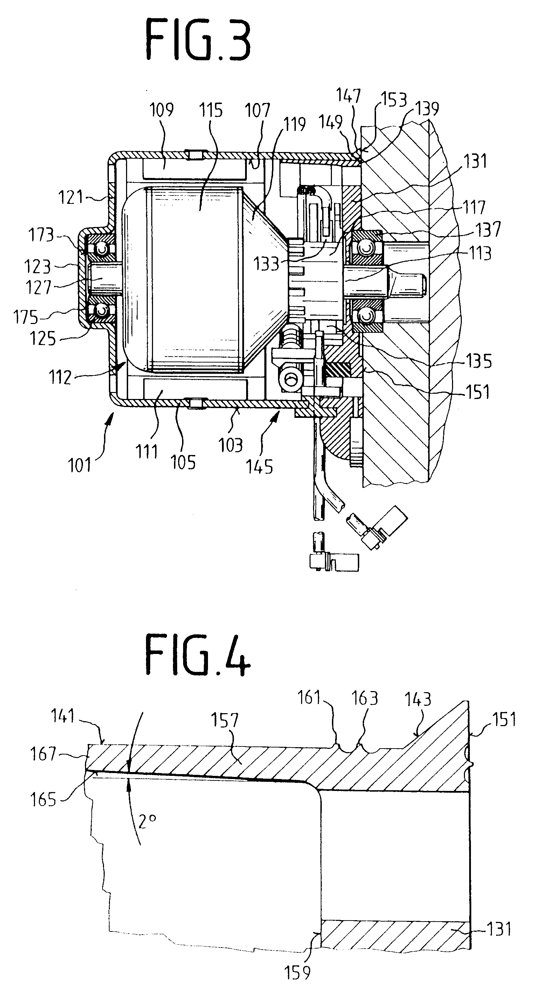

Erfindungsgemäß wird der Elektromotor 1 in Bezug auf eine Verkleinerung des Außendurchmessers und auf die Montagefreundlichkeit noch weiter verbessert. Die Figur 3 zeigt den neuen Kommutator 101 mit einem topfförmigen Motorgehäuse 103, dessen zylindrisches Mantelteil 105 auf der Innenfläche 107 mit Dauermagneten 109, 111 versehen ist. In dem Motorgehäuse 103 ist eine Rotorwelle 113 eines Rotors 112 mit einem Rotorblechpaket 115 angeordnet, das eine an einem Kommutator 117 angeschlossene Rotorwicklung 119 aufnimmt. Das Bodenteil 121 des Gehäuses 103 weist eine tiefgezogene Lagerstelle 123 für ein aus einem Kugellager 125 bestehendes Lager auf, in dem das freie Ende 127 der Rotorwelle 113 drehbar gelagert ist. Der Kommutatormotor 101 dient zum Antrieb einer Hydraulikpumpe, die in einem axial an dem topfförmig ausgebildeten Motorgehäuse 103 angeflanschten Pumpengehäuse 129 gelagert ist. Zwischen dem Pumpengehäuse 129 und dem Motorgehäuse 103 ist wie in Figur 1 ein Flachdichtungselement gelagert, welches aus einem Isolierstoff besteht und gleichzeitig als Bürstentragplatte 131 für die mit dem Kommutator zusammenwirkenden Bürsten 133, 135 dient. Diese Bürstentragplatte 131 dient gleichzeitig als Zentrierelement für ein auf der Rotorwelle 113 fest angeordnetes zweites Kugellager 137 und schließt das Motorgehäuse 103 flüssigkeitsdicht ab. Zu diesem Zweck weist das topfförmige Motorgehäuse 103 eine an die innere, zylindrische Mantelfläche 107 sich als Erweiterung anschließende, kegelförmig ausgebildete Dichtungsfläche 139 auf, welche mit einer an der mit einer zylindrischen Paßfläche 141 in das Motorgehäuse 103 einschiebbaren Bürstentragplatte 131 angeordneten kegeligen Gegendichtungsfläche 143 in Anlage bringbar ist. Das aus einem Tiefziehteil bestehende Gehäuse 103 weist an seinem die Bürstentragplatte 131 aufnehmenden Ende 145 einen integriert angeordneten, ringförmigen Verbindungsflansch 147 auf, an dessen Innenseite 149 die Dichtungsfläche 139 angeordnet ist. Nach dem Schließen der Öffnung des Motorgehäuses 103 liegen die Außenflächen 151, 153 der Bürstentragplatte 131 und des Verbindungsflansches 147 in einer Ebene. Zwecks einer besseren Dichtungswirkung ist die Außenfläche 151 der Bürstentragplatte 131 noch mit einer umlaufenden vorstehend ausgebildeten Dichtungslippe 155 versehen.

Die Paßfläche 141 wird durch die Außenfläche eines an der kreisförmig ausgebildeten Bürstentragplatte 131 angeordneten Kragens 157 gebildet, welcher an dem Bodenteil 159 der Bürstentragplatte 131 vorstehend und unlaufend angeordnet ist. Die Dichtungswirkung gegen Eindringen von Flüssigkeiten in das Motorgehäuse 103 wird noch dadurch erhöht, daß die als Paßfläche 141 ausgebildete Außenfläche des Kragens 157 vorstehende, umlaufende Dichtungslippen 161, 163 aufweist. Übrigens ist der Kragen 157 auf seiner der Außenfläche 141 gegenüberliegenden Innenfläche 165 von dem Bodenteil 159 zu dem freien Ende 167 des Kragens 157 verjüngt ausgebildet. Vorteilhaft beträgt dieser Verjüngungswinkel 2°.

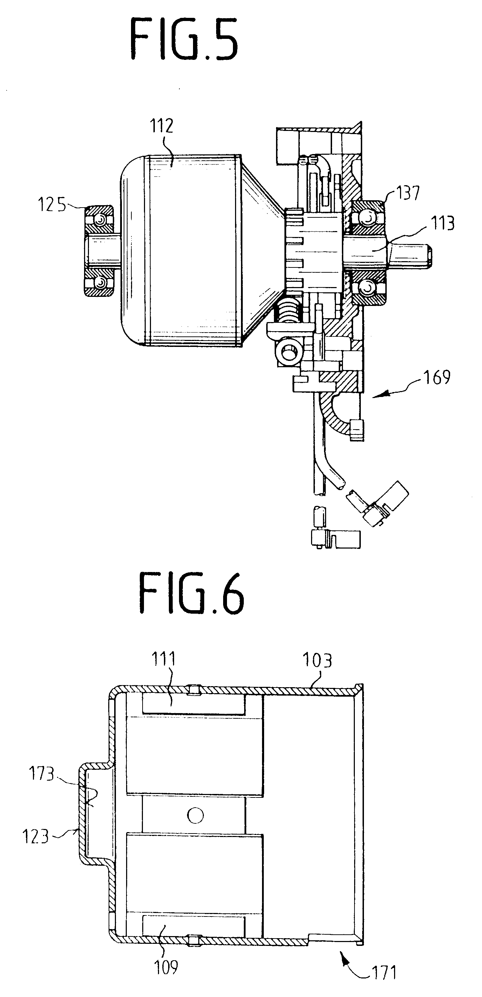

Die Endmontage des Motors 101 wird dadurch vereinfcht, daß dieser aus zwei Baugruppen 169 und 171 gemäß den Figuren 5 und 6 besteht. Hierbei enthält die Baugruppe 169 den Rotor 112 mit der Bürstentragplatte 131 und die bereits befestigten Lager 125, 137, während die Baugruppe 171 aus dem Motorgehäuse 103 mit den Permanentmagneten 109, 111 besteht. Durch eine einfache Steckverbindung sind die beiden vorkomplettierten Baugruppen 169, 171 miteinander verbindbar, wobei die auf der inneren Mantelfläche 107 angeordneten Permanentmagnete 109, 111 so gelagert sind, daß deren Magnetkräfte den Rotor 112 in dem Gehäuse 103 sicher in Anlage halten. Hierbei liegen die Dichtungsfläche 139 des Motorgehäuses 103 und die Gegendichtungsfläche 143 an der Bürstentragplatte 131 fest aufeinander. Außerdem liegt auf dem Boden 173 der Lagerstelle 123 eine Feder 175, durch die die Rotorwelle 113 spielfrei gehalten wird. Hierdurch werden Klappergeräusche sicher vermieden. Die Feder 175 beaufschlagt hierbei den Außenring des Kugellagers 125.

## Patentansprüche

1. Elektromotor, insbesondere feuchtigkeitsdicht geschlossener Kommutatormotor zum Antrieb einer Hydraulikpumpe, die in einem axial an dem topfförmig ausgebildeten Motorgehäuse angeflanschten Pumpengehäuse gelagert ist, wobei ein Lager für die Rotorwelle in dem Inneren des Motorgehäuses und ein Flachdichtungselement zwischen den Stirnflächen des Motor- und des Getriebegehäuses feuchtigkeitsdicht abschließend angeordnet sind, und wobei das Flachdichtungselement die aus einem Isolierwerkstoff bestehende Bürstentragplatte für die mit dem Kommutator zusammenwirkenden Bürsten ist, die gleichzeitig als Zentrierelement für ein auf der Rotorwelle fest angeordnetes Lager dient und als Deckel mit dem Motorgehäuse fest verbindbar ist, nach Patentanmeldung P 42 35 962.7, **dadurch gekennzeichnet**, daß das topfförmige Motorgehäuse (103) eine an die innere, zylindrische Mantelfläche (107) sich als Erweiterung anschließende kegelförmig ausgebildete Dichtungsfläche (139) aufweist, welche mit einer an der mit einer zylindrischen Paßfläche (141) in das Motorgehäuse (103) einschiebbaren Bürstentragplatte (131) angeordneten kegeligen Gegendichtungsfläche (143) in Anlage bringbar ist.

2. Elektromotor nach Anspruch 1, **dadurch gekennzeichnet**, daß das aus einem Tiefziehteil bestehende Gehäuse (103) an seinem die Bürstentragplatte (131) aufnehmenden Ende (145) einen integriert angeordneten, ringförmigen Verbindungsflansch (147) aufweist, an dessen Innenseite (149) die Dichtungsfläche (139) angeordnet ist.

3. Elektromotor nach Anspruch 1 oder 2, **dadurch gekennzeichnet**, daß die Außenflächen (151, 153) der Bürstentragplatte (131) und des Verbindungsflansches (147) in einer Ebene liegen.

4. Elektromotor nach Anspruch 1, 2 oder 3, **dadurch gekennzeichnet**, daß die Außenfläche (151) der Bürstentragplatte (131) umlaufende, vorstehend ausgebildete Dichtungslippen (155) aufweist.

5. Elektromotor nach einem der vorhergehenden Ansprüche, **dadurch gekennzeichnet**, daß die Paßfläche (141) durch die Außenfläche einer an der kreisförmig ausgebildeten Bürstentragplatte (131) durch einen an deren Bodenteil (159) vorstehend angeordneten, umlaufenden Kragen (157) gebildet ist.

6. Elektromotor nach Anspruch 5, **dadurch gekennzeichnet**, daß die Außenfläche (141) des Kragenteiles (157) umlaufende, vorstehende Dichtungslippen (161, 163) aufweist.

7. Elektromotor nach Anspruch 5 oder 6, **dadurch gekennzeichnet**, daß der Kragen (157) auf seiner der zylindrischen Außenfläche (141) gegenüberliegenden Innenfläche (165) von dem Bodenteil (159) zu dem freien Ende (167) des Kragens (157) verjüngt ausgebildet ist.

8. Elektromotor nach Anspruch 7, **dadurch gekennzeichnet**, daß der Kragen (157) auf seiner Innenseite (165) einen Verjüngungswinkel von 2° aufweist.

9. Elektromotor nach einem der vorhergehenden Ansprüche, **dadurch gekennzeichnet**, daß er aus zwei vormontierten Baugruppen besteht, von denen die eine Baugruppe (171) das Gehäuse (103) mit den Permanentmagneten (109, 111) und die andere Baugruppe (169) den Rotor (112) mit der Bürstentragplatte (131) und den Lagern (125, 137) enthält.

10. Elektromotor nach Anspruch 9, **dadurch gekennzeichnet**, daß das an dem freien Ende (127) der Rotorwelle (113) angeordnete Lager (125) in einer tiefgezogenen Lagerstelle (123) in dem Gehäuse (103) arretiert gelagert ist.

11. Elektromotor nach Anspruch 10, **dadurch gekennzeichnet**, daß auf dem Boden (173) der tiefgezogenen Lagerstelle (123) eine Feder (175) angeordnet ist, welche den Außenring des Kugellagers (125) beaufschlagt.

12. Elektromotor nach einem der vorhergehenden Ansprüche, **dadurch gekennzeichnet**, daß die auf der inneren Mantelfläche (107) des Gehäuses (103) angeordneten Permanentmagnete (109, 111) so gelagert sind, daß deren Magnetkräfte den Rotor (112) in dem Gehäuse (103) in Anlage halten.
